Europäisches Patentamt

**European Patent Office**

**Office européen des brevets**

(11) Numéro de publication : **0 013 202**
**B1**

(12) **FASCICULE DE BREVET EUROPÉEN**

(45) Date de publication du fascicule du brevet :
**11.05.83**

(21) Numéro de dépôt : **79400942.3**

(22) Date de dépôt : **30.11.79**

(51) Int. Cl.³ : **B 64 C 25/12**, B 60 B 33/06

─────────────────────────────

(54) **Train d'atterrissage principal à balancier et à relevage latéral pour aéronefs.**

(30) Priorité : **29.12.78 FR 7836807**

(43) Date de publication de la demande :
**09.07.80 Bulletin 80/14**

(45) Mention de la délivrance du brevet :
**11.05.83 Bulletin 83/19**

(84) Etats contractants désignés :
**DE GB IT**

(56) Documents cités :
**US A 2 974 909**
**US A 3 822 048**

(73) Titulaire : **MESSIER-HISPANO-BUGATTI (S.A)**
**5, rue Louis Lejeune**
**F-92120 Montrouge (FR)**

(72) Inventeur : **Masclet, Jean**
**11, Bd Davout**
**F-75020 Paris (FR)**
Inventeur : **Turiot, André**
**77, Ave de l'Escadrille N. Niemen**
**F-91390 Morsang-S/Orge (FR)**

(74) Mandataire : **Flavenot, Bernard**
**S.E.D.I.C. 21, rue Molière**
**F-92120 Montrouge (FR)**

EP 0 013 202 B1

Jouve, 18, rue St-Denis, 75001 Paris, France

Train d'atterrissage principal à balancier et à relevage latéral pour aéronefs

L'invention a pour objet un train d'atterrissage principal à balancier et à relevage latéral pour aéronefs. Il est déjà connu de nombreux trains d'atterrissage de ce type, notamment par les deux brevets US 2.974.909 et 3.822.048. Ils comportent généralement deux atterrisseurs positionnés symétriquement de part et d'autre du plan longitudinal de symétrie de l'aéronef, chaque atterrisseur comprenant une jambe, articulée par l'une de ses extrémités autour d'un axe de relevage sur la structure de l'aéronef, et sur l'autre extrémité de laquelle s'articule, autour d'un axe transversal par rapport au plan longitudinal de symétrie de l'aéronef, un balancier sur lequel au moins une roue est montée pivotante autour d'un axe de rotation, la manœuvre de la jambe autour de l'axe de relevage ainsi que le contreventement de la jambe en position « train sorti » étant assurés par un vérin de contrefiche, articulé, d'une part, sur la structure de l'aéronef, et, d'autre part, sur la jambe, et les débattements du balancier portant la ou les roues étant amortis par un amortisseur articulé, d'une part, sur la jambe, et, d'autre part, sur le balancier. Les trains connus de ce type présentent l'inconvénient d'être constitués de deux atterrisseurs différents, l'atterrisseur gauche n'étant pas identique à l'atterrisseur droit, du fait de la structure de la jambe, notamment au niveau de l'extrémité par laquelle la jambe est articulée sur l'aéronef, et de la position sur la jambe des attaches de liaison au vérin et à l'amortisseur du fait également de la structure du balancier, notamment au niveau de l'extrémité par laquelle ce dernier s'articule sur la jambe, et de la position sur le balancier des attaches de liaison à l'amortisseur. En conséquence, la fabrication de tels trains d'atterrissage est coûteuse, puisqu'il faut fabriquer, généralement, deux types de jambe, et, éventuellement, aussi deux types de balancier, la maintenance étant également plus coûteuse du fait que les atterrisseurs droits et gauches ne sont pas interchangeables.

Par la présente invention, on se propose de remédier à ces inconvénients. La présente invention a aussi pour but de réaliser un train d'atterrissage qui puisse constituer aussi bien un train gauche qu'un train droit avec un minimum d'intervention, plus particulièrement adapté pour les trains comportant un balancier monté à l'extrémité d'une jambe, quand le plan du balancier est déporté et/ou fait un angle non nul par rapport au plan de la jambe.

Plus précisément, la présente invention a pour objet un train d'atterrissage principal pour aéronef, comportant deux atterrisseurs du type à balancier et à relevage latéral, positionnés symétriquement de part et d'autre du plan longitudinal de symétrie de l'aéronef, comprenant, chacun une jambe articulée autour d'un axe de relevage par l'une de ses extrémités sur la structure de l'aéronef, et sur l'autre extrémité de laquelle s'articule autour d'un axe transversal par rapport au plan longitudinal de symétrie de l'aéronef, un balancier sur lequel au moins une roue est montée pivotante autour d'un axe de rotation, la manœuvre de la jambe autour de l'axe de relevage ainsi que le contreventement de la jambe en position « train sorti » étant assurés par un vérin de contrefiche articulé, d'une part, sur la structure de l'aéronef, et, d'autre part, sur la jambe, et les débattements du balancier portant la roue vis-à-vis de la jambe étant amortis par un amortisseur articulé à la fois sur la jambe et sur le balancier autour d'un axe, la jambe de l'atterrisseur présentant un premier plan de symétrie perpendiculaire à l'axe de relevage et au plan longitudinal de l'aéronef, et en ce que le balancier présente lui aussi un second plan de symétrie défini par l'axe transversal d'articulation du balancier sur la jambe de l'axe de rotation de la ou des roues sur le balancier, caractérisé par le fait que ledit axe sur lequel est articulé ledit amortisseur est situé dans le second plan de symétrie.

La présente invention sera mieux comprise à l'aide d'un exemple particulier de réalisation, décrit à titre non limitatif, en référence aux figures annexées dans lesquelles :

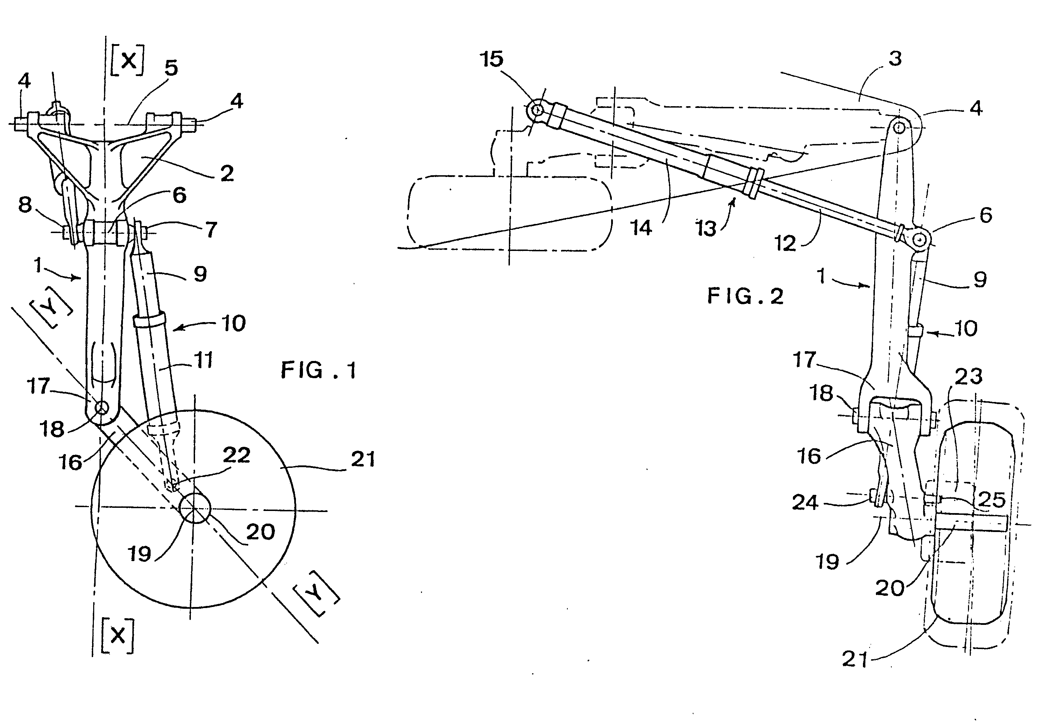

Les figures 1 et 2 représentent l'atterrisseur gauche, respectivement en vue de côté et en vue de face, du train d'atterrissage principal à balancier et à relevage latéral ; l'atterrisseur droit étant symétrique et composé de pièces identiques.

En référence à ces figures 1 et 2, l'atterrisseur gauche est constitué d'une jambe 1, dont la structure présente un plan de symétrie (X,X) perpendiculaire au plan longitudinal de symétrie de l'aéronef. L'une des extrémités de la jambe 1 est constituée par un caisson 2, de forme générale triangulaire, symétrique de part et d'autre du plan (X,X), et se rattachant à la partie centrale de la jambe 1 par l'un de ses sommets, la base opposée à ce sommet constituant l'extrémité du caisson 2, venant s'articuler dans la structure 3 de l'aéronef par l'intermédiaire de deux pivots 4, également symétriques par rapport au plan (X,X), autour d'un axe de relevage 5 perpendiculaire au plan (X,X). La jambe 1 de l'aéronef présente également un axe 6, situé sur la face externe de la jambe 1 par rapport au plan longitudinal de symétrie de l'aéronef, cet axe 6 étant perpendiculaire au plan de symétrie (X,X), et parallèle à l'axe 5. Sur les deux extrémités 7 et 8 de l'axe 6, s'articulent respectivement la tige 9 de l'amortisseur 10 et la tige 12 du vérin contrefiche 13, les extrémités des tiges 9 et 12 étant retenues sur l'axe 6 symétriquement par rapport au plan (X,X). Le cylindre 14 du vérin 13 s'articule autour d'un point fixe 15 de la structure de l'aéronef par l'intermédiaire d'un axe, en utilisant des moyens conventionnels connus.

L'atterrisseur comprend également un balancier 16, s'articulant par l'une de ses extrémités autour d'un axe transversal 18, retenu dans une fourchette 17 dissymétrique que présente l'autre extrémité de la jambe 1, le centre de la fourchette d'articulation 17 étant décalé vers l'extérieur de l'aéronef, par rapport au plan longitudinal de symétrie de ce dernier, de façon à augmenter la voie du train d'atterrissage. A son autre extrémité, le balancier 16 est muni d'une fusée 20 sur laquelle une roue 21 est montée pivotante autour d'un axe de rotation 19.

La structure du balancier 16 présente également un plan de symétrie (Y,Y) défini par l'axe transversal 18 et par l'axe de rotation 19. Par ailleurs, un troisième axe 22, parallèle aux axes 18 et 19, est porté par le balancier 16 entre les deux axes 18 et 19, de sorte que le cylindre 11 de l'amortisseur 10 s'articule sur l'extrémité 24, orientée vers le plan longitudinal de symétrie de l'aéronef, de cet axe 22, tandis que son autre extrémité 25 est rattachée à un dispositif de freinage 23 reçu dans la roue 21.

Le balancier 16 est incliné vers l'extérieur de l'aéronef, en position « train sorti », de sorte que l'extrémité du balancier 16 portant la roue 21 soit à l'extérieur par rapport à l'extrémité par laquelle le balancier 16 s'articule sur la jambe 1 ; de ce fait, cette disposition du balancier 16 permet d'augmenter la voie de l'atterrisseur et d'équiper ce dernier de roues et de pneumatiques de diverses tailles.

Le passage du train d'atterrissage de la position « train sorti » à la position « train rentré » s'effectue de la manière suivante ; Le vérin 13 étant alimenté hydrauliquement, la tige 12 du vérin de contrefiche 13 coulisse à l'intérieur du cylindre 14, la jambe 1 est donc entraînée et pivote autour de son axe de relevage 4, tandis que le vérin 13 qui pivote autour du point fixe 15 de la structure jusqu'à ce que la tige 12 du vérin 13 soit en position de rétraction maximale dans le cylindre 14. En position « train rentré », la jambe 1 est logée en position horizontale dans le fuselage ou dans un caisson de fuselage de l'aéronef voire même dans un moignon de voilure dont sont équipés certains hélicoptères.

L'avantage principal que présente ce train d'atterrissage est de permettre l'interchangeabilité des atterrisseurs ou des éléments constituant les atterrisseurs tels que la jambe 1 et le balancier 16. En effet, le passage de ces éléments de l'atterrisseur gauche à l'atterrisseur droit, ou vice versa s'effectue indifféremment du fait des plans de symétrie (X,X) et (Y,Y) présentés respectivement par la structure de la jambe 1 et par celle du balancier 16.

Pour positionner l'atterrisseur gauche sous la partie droite de la structure de l'aéronef, il suffit de désarticuler les tiges 9 et 12, appartenant respectivement à l'amortisseur 10 et au vérin 13, des extrémités 7 et 8 de l'axe 6 de la jambe 1, puis de désaccoupler les points 4 de la partie gauche de la structure, et de remonter l'ensemble sous la partie droite de la structure après avoir fait subir à l'atterrisseur gauche, une rotation de 180° autour de l'axe vertical de la jambe 1, de manière à ce que la roue 21 se trouve à l'extérieur par rapport au plan longitudinal de symétrie de l'aéronef, les pivots 4 étant accouplés sur la structure 3 de l'aéronef, puis la tige 12 du vérin 13 étant articulée sur l'extrémité 7 de l'axe 6, et la tige 9 de l'amortisseur 10 sur l'extrémité 8 de l'axe 6 de la jambe 1.

De même, si l'on veut disposer le balancier gauche sur l'atterrisseur droit. Le cylindre 11 de l'amortisseur 10 est désarticulé de l'extrémité 24 de l'axe 22 porté par le balancier 16, et ce dernier est détaché de la jambe 1 en avant de l'axe 18 de la fourchette 17 de la jambe 1. L'ensemble constitué par le balancier 16 et la roue 21 est disposé à l'extrémité de la jambe 1 de l'atterrisseur droit de sorte que la roue 21, qui se trouvait initialement à gauche et à l'extérieur de l'aéronef par rapport au plan longitudinal de symétrie de l'aéronef, soit à droite et, toujours à l'extérieur de l'aéronef, le balancier 16 étant ensuite remonté sur la jambe 1 de l'atterrisseur droit au moyen de l'axe 18, et le cylindre 11 de l'amortisseur 10 de droite est articulé sur l'extrémité 24 de l'axe 22 du balancier 16.

On peut remarquer qu'en détachant la tige 9 de l'amortisseur 10 de l'extrémité 7 de l'axe 6 de la jambe 1, au lieu de détacher le cylindre 11 de l'amortisseur 10 de l'axe 22, on peut également transporter l'amortisseur 10 avec le balancier 16 d'un atterrisseur à l'autre.

## Revendications

1. Train d'atterrissage principal pour aéronef, comportant deux atterrisseurs du type à balancier et à relevage latéral, positionnés symétriquement de part et d'autre du plan longitudinal de symétrie de l'aéronef, comprenant, chacun, une jambe (1) articulée autour d'un axe de relevage (5) par l'une de ses extrémités sur la structure (3) de l'aéronef, et sur l'autre extrémité de laquelle s'articule autour d'un axe transversal (18) par rapport au plan longitudinal de symétrie de l'aéronef, un balancier (16) sur lequel au moins une roue (21) est montée pivotante autour d'un axe de rotation (19), la manœuvre de la jambe (1) autour de l'axe de relevage (5) ainsi que le contreventement de la jambe (1) en position « train sorti » étant assurés par un vérin de contrefiche (13) articulé, d'une part, sur la structure (3) de l'aéronef, et, d'autre part, sur la jambe (1), et les débattements du balancier (16) portant la roue (21) vis-à-vis de la jambe (1) étant amortis par un amortisseur (10) articulé à la fois sur la jambe (1) et sur le balancier (16) autour d'un axe (22), la jambe (1) de l'atterrisseur présentant un premier plan de symétrie (X,X) perpendiculaire à l'axe de relevage (5) et au plan longitudinal de l'aéronef, et en ce que le balancier (16) présente lui aussi un second plan de symétrie (Y,Y) défini par l'axe transversal (18) d'articulation du balancier (16) sur la jambe (1) et l'axe de rotation (19) de la ou des roues (21) sur le balancier (16), caractérisé par le fait que ledit axe (22) sur lequel est articulé ledit amortisseur (10) est situé dans le second plan de symétrie (Y,Y).

2. Train d'atterrissage principal pour aéronef selon la revendication 1, caractérisé en ce que sur la jambe (1) de l'atterrisseur est prévu un axe perpendiculaire (6) au plan de symétrie de la jambe (1), sur l'une des extrémités (8) duquel s'articule le vérin (13) et sur l'autre extrémité (7) duquel s'articule l'amortisseur (10).

3. Train d'atterrissage selon les revendications 1 et 2, caractérisé en ce que l'extrémité par laquelle la jambe (1) est articulée sur la structure (3) de l'aéronef est constituée par un caisson (2) de forme générale triangulaire articulé, autour de l'axe de relevage (5), par une de ses bases, dont les sommets portent chacun un pivot (4) d'articulation sur la structure (3).

4. Train d'atterrissage selon l'une des revendications 1 à 3, caractérisé en ce que le balancier (16) est incliné vers l'extérieur de l'aéronef, en position « train sorti », par rapport au plan longitudinal de celui-ci, de sorte que la partie du balancier (16) portant la ou les roues (21) soit à l'extérieur par rapport à la partie par laquelle le balancier (16) s'articule sur la jambe (1).

5. Train d'atterrissage pour aéronef selon l'une des revendications 1 à 4, caractérisé en ce qu'en position « train sorti », l'amortisseur (10) s'articule au balancier (16) sur l'extrémité, dirigée vers le plan longitudinal de symétrie de l'aéronef, d'un axe (22) porté par le balancier (16), parallèle à l'axe de rotation (19) de la roue (21), et dont l'autre extrémité est liée à un dispositif de freinage de roue (23).

6. Train d'atterrissage selon l'une des revendications 2 à 5, caractérisé en ce que l'axe (6) de la jambe (1) perpendiculaire au plan de symétrie de cette dernière et sur lequel s'articulent le vérin (13) et l'amortisseur (10), est porté sur la face externe de la jambe (1) par rapport au plan longitudinal de symétrie de l'aéronef en position train sorti.

**Claims**

1. A main landing gear for an aircraft, comprising two laterally liftable lever type undercarriages placed symmetrically on either side of the longitudinal plane of symmetry of the aircraft, each undercarriage comprising : a leg (1) hinged at one end about a lifting axis (5) on the structure (3) of the aircraft, and its other end having a lever (16) hinged thereto about an axis which is transversal relative to the longitudinal plane of symmetry of the aircraft, said lever having at least one wheel (21) rotatably mounted about a rotation axis (19), movement of the leg (1) about the lifting axis (5) and windbracing of the leg (1) in the landing gear extended position being provided by by a bracing jack (13) which is hinged both to the structure (3) of the aircraft and to the leg (1), and movement of the wheel-carrying lever (16) relative to the leg (1) being damped by a damper (10) hinged both to the leg (1) and to the lever (16) about an axis (22), the undercarriage leg (1) having a first plane of symmetry (X,X) perpendicular to the lifting axis (5) and to the longitudinal plane of the aircraft, and in that the lever (16) itself has a second plane of symmetry (Y,Y) defined by the transversal axis (18) about which the lever (16) is hinged to the leg (1) and the axis of rotation (19) of the, or each, wheel (21) on the lever (16), characterised by the fact that said axis (22) about which the said damper (10) is hinged is situated in the second plane of symmetry (Y,Y).

2. A main landing gear for an aircraft according to claim 1, characterised in that a shaft (6) is provided on the leg (1) of the undercarriage perpendicular to the plane of symmetry of the leg (1), one end (8) of said shaft being hinged to the jack (13) and the other end (7) thereof being hinged to the damper (10).

3. A landing gear according to claims 1 and 2, characterised in that the end whereby the leg (1) is hinged to the structure (3) of the aircraft is constituted by a generally triangular box (2) having one of its sides hinged about the lifting axis (5) with each of the vertices of said side bearing a pivot (4) for rotation relative to the structure (3).

4. A landing gear according to any one of claims 1 to 3, characterised in that when in the landing gear extended position, the lever (16) is inclined towards the outside of the aircraft relative to the longitudinal plane of symmetry thereof, whereby the portion of the lever (16) on which the, or each, wheel (21) is mounted lies outside the portion of the lever (16) hinged to the leg (1).

5. A landing gear for an aircraft according to any one of claims 1 to 4, characterised in that when in the landing gear extended position, the damper (10) is hinged to the lever (16) about one end of a shaft (22) carried by the lever (16), said end being directed towards the longitudinal plane of symmetry of the aircraft, said shaft being parallel to the axis of rotation of the wheel, and its other end being connected to a wheel braking unit (23).

6. A landing gear according to any one of claims 2 to 5, characterised in that the axis (6) of the leg (1) which is perpendicular to the plane of symmetry thereof and about which the jack (13) and the damper (10) are hinged, is mounted on the outside face of the leg (1) relative to the longitudinal plane of symmetry of the aircraft, when in the undercarriage extended position.

**Ansprüche**

1. Flugzeughauptfahrwerk mit zwei seitlich einziehbaren Fahrgestellen mit Schwinge, die symmetrisch auf beiden Seiten der Symmetrieebene des Flugzeugs in Längsrichtung angeordnet sind und die jeweils ein Bein (1), das mit einem Ende um eine Einziehschwenkachse (5) am Flugzeugaufbau (3) schwenkbar angelenkt ist, während am anderen Ende hiervon um eine Transversalachse (18) in Bezug auf die Symmetrieebene des Flugzeugs in Längsrichtung eine Schwinge (16) angelenkt ist, auf der wenig-

stens ein Rad (21) um eine Rotationsachse (19) drehbar angelenkt ist, aufweisen, wobei die Betätigung des Beins (1) um die Einziehschwenkachse (5) als auch die Querspannung des Beins (1) bei ausgefahrenem Fahrwerk durch einen Verstrebungszylinder (13) sichergestellt wird, der einerseits am Flugzeugaufbau (3) und andererseits am Bein (1) angelenkt ist, und die Schwingungen der Schwinge (16), die das Rad (21) gegnüber dem Bein (1) abstützt, durch ein Federbein (10) gedämpft werden, das einmal an dem Bein (1) und zum anderen an der Schwinge (16) um eine Achse (22) drehbar angelenkt ist, wobei das Bein (1) des Fahrgestells eine erste Symmetrieebene (X,X) senkrecht zur Einziehschwenkachse (5) und zur Längsebene des Flugzeugs und die Schwinge (16) eine zweite Symmetrieebene (Y,Y) definiert durch die Transversalachse (18) der Anlenkung der Schwinge (16) an dem Bein (1) und die Rotationsachse (19) des oder der Räder (21) gegenüber der Schwinge (16) aufweisen, dadurch gekennzeichnet, daß die Achse (22), auf der das Federbein (10) angelenkt ist, in der zweiten Symmetrieebene (Y,Y) angeordnet ist.

2. Flugzeughauptfahrwerk nach Anspruch 1, dadurch gekennzeichnet, daß an dem Bein (1) des Fahrgestells eine Achse (6) senkrecht zur Symmetrieebene des Beins (1) vorgesehen ist, an deren einem Ende (8) der Zylinder (13) und an deren anderem Ende (7) das Federbein (10) angelenkt sind.

3. Flugzeughauptfahrwerk nach den Ansprüchen 1 und 2, dadurch gekennzeichnet, daß das Ende, mit dem das Bein (1) an dem Flugzeugaufbau (3) angelenkt ist, durch eine Strebenanordnung von allgemein dreieckiger Form gebildet wird, die um die Einziehschwenkachse (5) drehbar über eine ihrer Basen angelenkt ist, deren Ecken jeweils einen Drehzapfen (4) zum Schwenken gegenüber dem Aufbau (3) tragen.

4. Flugzeughauptfahrwerk nach einem der Ansprüche 1 bis 3, dadurch gekennzeichnet, daß die Schwinge (16) zur Außenseite des Flugzeugs bei ausgefahrenem Fahrwerk in Bezug auf die Längsebene des Flugzeugs derart geneigt ist, daß der Teil der Schwinge (16), der das oder die Räder (21) trägt, in Bezug auf den Teil, mit dem die Schwinge (16) an dem Bein (1) angelenkt ist, außen ist.

5. Flugzeughauptfahrwerk nach einem der Ansprüche 1 bis 4, dadurch gekennzeichnet, daß bei ausgefahrenem Fahrwerk sich das Federbein (10) gegenüber der Schwinge (16) mit dem Ende, das zur Symmetrieebene des Flugzeugs in Längsrichtung gerichtet ist, um eine von der Schwinge (16) getragenen Achse (22) dreht, die parallel zur Rotationsachse (19) des Rades (21) angeordnet ist, und dessen anderes Ende mit einer Bremseinrichtung (23) für das Rad verbunden ist.

6. Flugzeughauptfahrwerk nach einem der Ansprüche 2 bis 5, dadurch gekennzeichnet, daß die Achse (6) des Beins (1), die senkrecht zur Symmetrieebene des letzteren ist und um die sich der Zylinder (13) und das Federbein (10) drehen, auf der Außenseite des Beins (1) in Bezug auf die Symmetrieebene des Flugzeugs in Längsrichtung bei ausgefahrenem Fahrwerk getragen wird.

FIG.2

FIG.1